Europäisches Patentamt

European Patent Office

Office européen des brevets

(11) Publication number: **0 482 735 A2**

# EUROPEAN PATENT APPLICATION

(21) Application number: **91304581.1**

(22) Date of filing: **21.05.91**

(51) Int. Cl.5: **F16F 15/12**

(30) Priority: **25.10.90 US 603170**

(43) Date of publication of application:
**29.04.92 Bulletin 92/18**

(84) Designated Contracting States:
**DE ES FR GB IT**

(71) Applicant: **BORG-WARNER AUTOMOTIVE TRANSMISSION AND ENGINE COMPONENTS CORPORATION**
**6700 18-1/2 Mile Road**
**Sterling Heights, Michigan 48314(US)**

(72) Inventor: **Yuergens, Kenneth C.**
**24055 Springbrook**
**Farmington Hills, Michigan 48336(US)**
Inventor: **Hall, David A.**
**642 Lincoln Avenue**
**Clawson, Michigan 48017(US)**

(74) Representative: **Allden, Thomas Stanley et al**
**A.A. THORNTON & CO. Northumberland House 303-306 High Holborn**
**London WC1V 7LE(GB)**

(54) Torsional vibration damper with retaining ring.

(57) A torsional vibration damper assembly includes a pair of retaining plates forming a housing operatively connected to a torque input and a hub member operatively connected to a torque output having at least two radially extending arms disposed within the housing. A drive member operatively connected to the torque input is also disposed within the housing. Resilient members are interposed between the hub arms and the drive member. A retaining ring freely disposed within the housing circumferentially encompasses the resilient members and the hub arms and provides a frictional control medium to reduce the increase in normal load at frictional surfaces and consequent variation in performance due to changes in operating speed.

FIG. 1

Rank Xerox (UK) Business Services
(-/2.17/2.0)

## BACKGROUND OF THE INVENTION

### Field Of The Invention

The present invention relates to a torsional vibration damper assembly for use in a torsion coupling between a driving member and a driven member, such as a clutch driven member. More particularly, the present invention relates to a torsional vibration damper assembly having a floating annular ring encompassing the resilient members and spacer members within the damper housing.

### Description Of The Prior Art

A variety of torsional vibration damper assemblies have been developed in which a torsional coupling is provided between a pair of axially aligned shafts of a driving member and a driven member. Such damper assemblies are utilized in the clutch assembly of a manual transmission or in the lock-up clutch of a torque converter of an automatic transmission.

These torsional vibration damper assemblies are used primarily as a means of damping or absorbing torsional vibrations from the vehicle engine. These vibrations typically include pulses and other shocks and impact loads which are transmitted from the engine to the transmission and drive line during vehicle operation. In a manual transmission these shocks may occur as a result of the sudden engagement of the clutch. In an automatic transmission with a constant slipping device, vibrations and shocks will occur as a result of the engagement of a lock-up clutch in the torque converter to provide direct drive.

Typically, such torsional vibration damper assemblies include a torque input means and a torque output means in the form of retaining plates. A plurality of floating spacers and resilient spring members are placed between the plates. The spacers and spring members are positioned in the path of drive means which are mounted on, or integral with, the retaining plates. In this manner, the spacers and spring members provide a resilient connection in the drive path between the torque input means and torque output means in order to provide the appropriate damping features.

Frictional contact between the spacers and spring members and the hardened material in the retaining plates provides a lag between the input and output means. This frictional resistance, in cooperation with the action of the resilient members, acts to smooth out or damp rapid changes in torque. The frictional lag is not constant and tends to increase with rotational velocity. This is a result of the increase in the centrifugal force experienced by the rotating components as the velocity increases, which, in turn, increases the normal load at frictional surfaces.

Varying the frictional lag results in variations in the performance curve of the damper assembly. This variation is not generally predictable as it is determined by component masses which result from specific design criteria. Such unpredictable variations in damping are not desirable as they can lead to departures from the optimum performance of the damper assembly, especially at high speeds of rotation where frictional lag is generally greater than desired.

As the characteristics of an individual engine and transmission system can vary significantly with size, the optimum performance curve of a damper assembly for a specific system must be correspondingly tailored to exhibit particular characteristics. It is therefore important to be able to design a damper assembly that has the required performance curve in order to improve both performance and efficiency.

Some limited change in the performance curve of damper assemblies has been achieved by altering the frictional lag by the inclusion of additional components such as spacer pins. These spacer pins and the like move with the spring means and increase the frictional lag between the input and the output. Changes in the performance curve achieved in this manner have, however, proved difficult if not impossible to control or predict. In addition, the spacer pins add to both the complexity and cost of the assemblies.

It is therefore desirable to provide a damper assembly that enables greater control over its damping characteristics. It is also desirable to have a damper assembly that has a performance curve that can be more accurately predetermined to meet specific requirements. Most particularly, it is desirable to reduce the magnitude of increase in frictional lag with increase in rotational speed in a predictable manner without unduly adding to the complexity and cost of the assembly.

The torsional vibration assembly of the present invention meets the aforenoted needs by the inclusion of a retaining ring means within the damper assembly. The geometry of the retaining ring means can be altered to control the resulting damper performance curve.

## OBJECTS OF THE INVENTION

Accordingly, it is an object of this invention to provide an improved torsional vibration damper assembly that meets the aforementioned requirements.

It is a specific object of this invention to provide a torsional vibration damper assembly that has improved damping characteristics.

It is another object of this invention to provide a torsional vibration damper assembly that has greater control over the increase in friction at increased speeds.

It is a further object of this invention to provide a torsional vibration damper assembly which reduces the magnitude of the increase in normal load at the frictional surfaces at increased operating speeds.

Other objects, advantages and features of this invention will become apparent on reading the following detailed description and appended claims and on reference to the accompanying drawings.

## SUMMARY OF THE INVENTION

In accordance with one embodiment of this invention, a vibration damper assembly which achieves the foregoing objects includes a retainer ring means circumferentially encompassing the resilient means of a torsional vibration damper assembly. The ring acts to restrict outward radial movement of the resilient means as the rotational speed of the damper is increased.

The damper assembly comprises a pair of retaining plates forming a housing. Each retaining plate is operatively connected to a torque input means. The damper includes a hub assembly which is operatively connected to a torque output means. The hub member has at least two radially extending arms disposed within the housing. A drive means, operatively connected to the torque input means, is also disposed within the housing. Resilient means are interposed between the hub arms and the drive means.

The retaining ring means is freely disposed within the housing. The retaining means surrounds the resilient means and provides additional spring and frictional control in the assembly. The retaining means may be a ring constructed in a single piece or a series of pieces. The ring may be of constant or varying cross-section or a flat wound spring or other wire form.

As the operating speed of the damper increases, the normal load at the frictional surfaces is also increased. The use of the retaining ring means in each of the forms mentioned causes a reduction in this increase in normal load. The result is a reduction in the variation in damper performance characteristics which occur from changes in operating speed.

## BRIEF DESCRIPTION OF THE DRAWINGS

For a more complete understanding of this invention, reference should now be made to the embodiment illustrated in greater detail in the accompanying drawings and described below by way example only. In the drawings:

Figure 1 is a rear elevational view with portions broken away of a torsional vibration damper assembly including the retainer ring means of the present invention.

Figure 2 is a cross-sectional view of the damper assembly taken on the irregular line II-II of Figure 1.

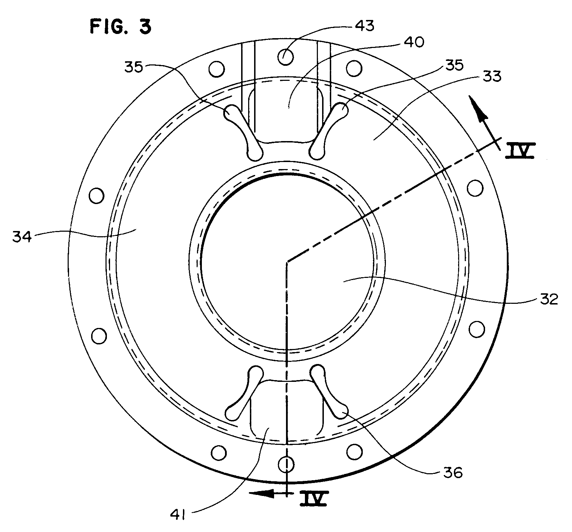

Figure 3 is a rear elevational view of the rear retainer plate of the damper assembly.

Figure 4 is a section through the retainer plate of Figure 3 taken on the irregular line IV-IV of Figure 3.

Figure 5 is a section through the assembly of Figure 1 showing the hub assembly and position of resilient means and spacers.

## DETAILED DESCRIPTION OF THE DRAWINGS

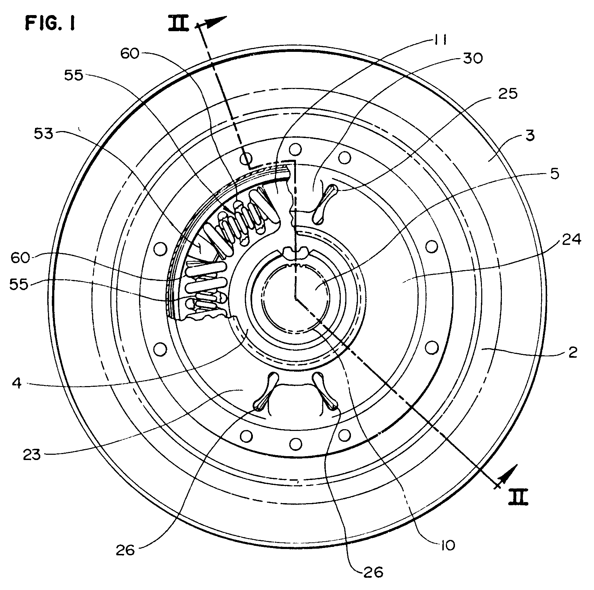

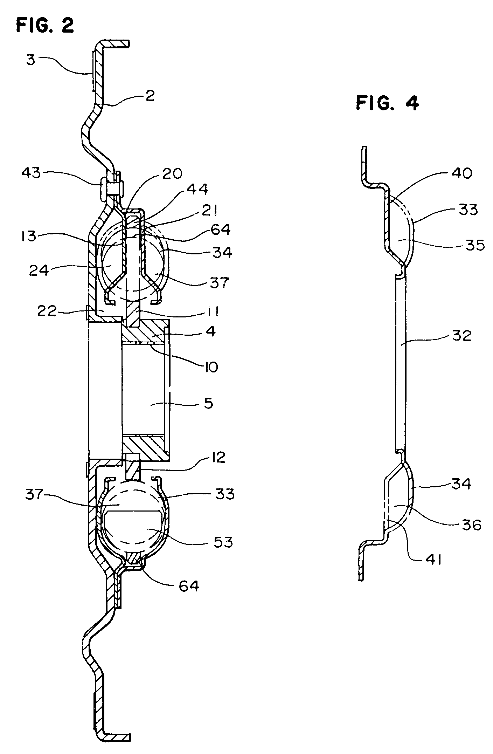

Turning now to the drawings, Figures 1 and 2 show a torsional vibration damper assembly 1 for connection to a torque input member or piston plate 2. The piston plate 2 has frictional member 3 located at its periphery for coupling to an external torque input means. The friction element can be a continuous pad or a plurality of resilient mounting pads. In a standard manual transmission, the external torque input means would be the friction plate of a clutch whereas in an automatic transmission assembly, the external torque input means would be a piston plate located in the housing of a torque converter.

The damper assembly includes a hub assembly or hub member 4 that is rotatable relative to the piston plate 2. The hub member has a central opening 5 with internal splines 10 adapted to be coupled with an output shaft (not shown). The output shaft constitutes the torque output means and drives a transmission input in a standard manual transmission assembly or the turbine for a torque converter in an automatic transmission assembly.

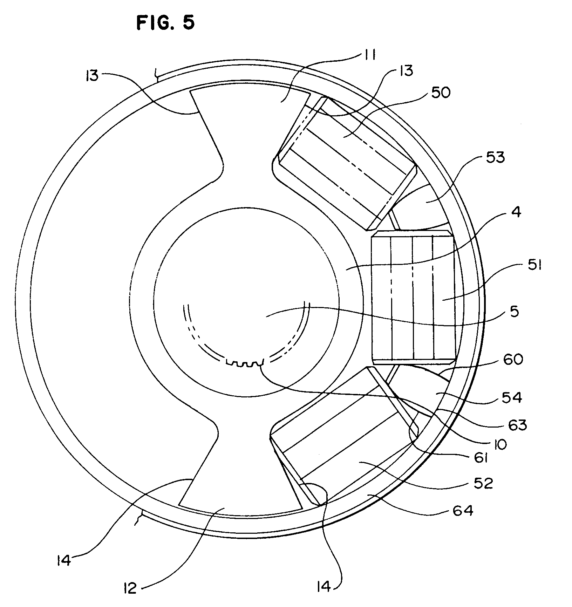

As shown in Figures 1 and 5, the hub member 4 has two diametrically opposed radially extending arms 11 and 12 with diverging sides. Each arm has a generally arcuate outer edge. The arms are positioned so that they are rotatable within a housing formed by the retainer plates 20 and 21.

The front retainer plate 20 is of generally annular configuration. The plate 20 has a central cavity 22 and a pair of axially aligned elongated arcuate channels 23, 24 situated toward its periphery. The arcuate channels 23, 24 are axially aligned. The channels are generally semicircular in cross-section and terminate at oppositely disposed drive straps 30, 31, defined by slots 25 and slots 26, respectively. The rear retainer plate 21 is similar in shape to the front retainer plate 20. As shown in Figure 4, the rear retainer plate 21 has a central cavity 32, arcuate channels 33, 34 and slot pairs 35 and 36, which define oppositely disposed drive straps 40 and 41, respectively.

The front and rear retainer plates 20, 21 are joined so that the channels 23, 24 in the front retainer plate 20 coincide with the channels 33, 34 in the rear retainer plate 21. In this manner, carrying chambers 37 are formed for portions of the internal structure of the damper assembly. The forward extending flange 42 of the rear retainer plate 21 is attached to the outer periphery of the front retainer plate 20 and to the piston plate 2 by rivets 43. The plates are secured to form a housing in which the hub member 4 is free to rotate between the front and rear retainer plates about a central axis. The housing also provides a peripheral channel 44 extending radially beyond the hub arms 11, 12 and carrying chambers 37. When at rest, as shown in Figure 1, the hub arms 11, 12 lie between the drive straps 30, 40 and 31, 41. Groups of resilient means are located in carrying chambers 37. The resilient means abut one of the drive straps 30, 40 or 31, 41 at one end and one diverging side of one of the hub arms 11 or 12 at the other.

Each of the groups of resilient means consists of three spring sets 50, 51, 52 and two sliding separators or spacer members 53, 54. The spacer members are interposed between adjacent spring sets. Each of the spring sets consists of one or more coaxial springs such as inner spring 55 and outer spring 60, as shown in Figure 1. All of the springs may be of equal spring rate or the rates may differ to achieve the required damping characteristics. Each of the spacer members 53, 54 is preferably a tapered cylinder with inwardly converging sides 61, 62 and a generally arcuate base 63.

Circumferentially encompassing the spring sets 50, 51, 52 and spacer members 53, 54 is an annular retainer ring 64 accommodated in the peripheral channel 44. The ring 64 may be constructed in a single piece or in a series of segments. The cross-section of the ring may be constant or may vary around the circumference. The ring may also be constructed of a flat wound spring or other wire form.

In operation, the three spring sets 50, 51, 52 in each group of resilient means act in series.

The two groups of resilient means act in parallel. Although the loads of the spring sets in each group are not additive, the loads of the two spring groups 36 are additive when torque is applied to the clutch and to the vibration damper 1 through the piston plate 2. Upon application of the torque, the retainer plates 20, 21 are rotated and the aligned pair of drive straps 30, 40 and 31, 41 act against the spring sets 44 to compress the springs in each set against spacer members 50. Movement of the first spacer member results in the compression of spring sets 45. This causes movement of the next spacer member 51 which in turn results in the compression of subsequent spring sets 46. In this manner, the spring sets act on the hub arms 11, 12. The movement of the hub arms 11, 12 rotates the hub member 10 to transfer torque to the output shaft (not shown).

As the housing and hub member 4 rotate, the spring groups 45 experience a centrifugal force that pushes them radially outwards against the retainer ring 64. The contact between the spring groups 45 and the retainer ring 64 provides a frictional lag between the piston plate 2 and the hub member 4.

The use of the retainer ring allows a reduction in the amount hardened material inside the retainer plates for the spring groups to rub against and avoids the addition of spacer pins. This resistance to movement acts in conjunction with the damping action of the spring groups to smooth out any rapid changes in torque. The retainer ring also provides improved dimension control for the damper assembly as it keeps loose parts such as the spring sets and sliding dividers in position. The inclusion of the retainer ring 64 also reduces impact loading between the spring groups and other components of the assembly improving the overall durability of the damper.

As the ring is thin in cross-section relative to the spring, the area of friction contact is relatively small. The ring restrains the spring against movement outward under centrifugal force. Contact between the resilient members and the retainer plates that would give a greater area of friction contact and result in greater lag is thereby reduced. As a result, control can be maintained over the magnitude of the increase in friction which occurs during increases in operating speed.

The stiffness of the retainer ring 64 can be chosen to allow a controlled increase in frictional lag with increasing rotational velocity. By having a ring that yields and expands as the springs push outwardly against it, the increase in lag can be controlled. The retainer ring can also improve the balance of the damper assembly by including precision balance weights and by balancing internal reaction forces.

In addition, as the sliding spacers no longer play a vital role in the amount of frictional lag experienced between the input and output members, there is greater freedom to select the configuration of the spacers to improve control over other characteristics of the performance curve of the assembly. It may even be possible to remove the spacers altogether in some applications.

The retainer ring 64 may take a variety of forms. The particular configuration shown in the embodiment described above is of one-piece circular construction with constant cross-section and internal and external diameters. The retainer ring may however be a two piece split ring construction with adjacent ends either joined or detached. The ring may also be a flat wound spring or other wire form that would produce a circumferential support and provide an additional spring medium in the damper to reduce shock transmissions. Furthermore, the retainer ring may be of non-constant cross-section in order to vary the internal geometry of the damper and modify the performance curve of the assembly.

From the foregoing it will be seen that the invention disclosed assists in overcoming the problems encountered in controlling the performance of damper assemblies by the inclusion of a retainer ring that circumferentially encompasses the spring groups and sliding spacer members.

The inclusion of the retainer ring to provide controlled frictional lag between the input and output members frees the operative components of the assembly from some of their design constraints enabling greater control to be exercised over the performance characteristics of the assembly both by the configuration of the ring itself and by redesigning the operative components within the new limitations.

While one preferred embodiment of the invention is illustrated, it will be understood, of course, that the invention is not limited to this embodiment. Those skilled in the art to which the invention pertains may make modification an other embodiments employing the principles of the invention, particularly upon considering the foregoing teachings.

## Claims

1. A vibration damper assembly to transmit torque between driving and driven members comprising:

    first and second retainer plates situated in adjacent relation to form a housing, each of said plates being operatively connected to torque input means;

    resilient means disposed within said housing;

    a hub assembly operatively connected to torque output means and having at least two radially extending arms disposed within said housing adapted to engage said resilient means;

    drive means operatively connected to said torque input means and disposed within the path of said resilient means; and

    ring means for retaining said resilient means, said ring means being freely disposed within said housing and adapted to circumferentially encompass said resilient means.

2. A vibration damper assembly as claimed in claim 1, wherein said first and second retainer plates are secured together and journalled about said hub assembly.

3. A vibration damper assembly as claimed in claim 1 or claim 2, wherein said retainer plates each have a pair of axially aligned arcuate channels, said retainer plates being oppositely oriented such that said arcuate channels coincide to form carrying chambers for said resilient means.

4. A vibration damper assembly as claimed in any of the preceding claims, wherein said drive means is integrally formed within said housing.

5. A vibration damper assembly as claimed in any of the preceding claims, wherein said resilient means comprises at least two spring sets in series, said adjacent spring sets being separated by floatable spacers.

6. A vibration damper assembly as claimed in claim 5, wherein said spring sets consist of two or more coaxial compression springs.

7. A vibration damper assembly as claimed in any of the preceding claims, wherein at least one of said floatable spacers has a tapered cylindrically shaped body with outwardly diverging edges terminating in a generally arcuate base portion.

8. A vibration damper assembly to transmit torque between driving and driven members comprising:

    an input member operatively connected to torque input means;

    a hub assembly operatively connected to torque output means;

    first and second retainer plates oppositely oriented to form a housing, each of said plates operatively connected to said input member;

    floating spacers within said housing;

resilient means within said housing between said spacers;

annular ring means for retaining said resilient means and said spacers, said ring means being freely disposed within said housing circumferentially encompassing said resilient means and said spacers;

said hub assembly including at least two radially extending arms adapted to engage said resilient means; and

each of said retaining plates having integral drive means interposed in the path of said resilient means.

9. A vibration damper assembly as claimed in claim 8, wherein said resilient means is a compression spring.

10. A vibration damper assembly as claimed in claim 8, wherein said resilient means comprises a plurality of coaxial compression springs.

11. A vibration damper assembly as claimed in any of the preceding claims, wherein said ring means is a resilient ring.

12. A vibration damper assembly as claimed in claim 11, wherein said resilient ring is a one-piece circular component of constant cross-section having constant inner and outer diameters.

13. A vibration damper assembly as claimed in claim 11, wherein said resilient ring is formed by split ring components.

14. A vibration damper assembly as claimed in claim 11, wherein said resilient ring is a split ring with ends joined.

15. A vibration damper assembly as claimed in claim 11, wherein said resilient ring is a split ring with ends detached.

16. A vibration damper assemby as claimed in claim 11, wherein said resilient ring is of non-constant cross section.

17. A vibration damper assembly as claimed in any of claims 1 to 10, wherein said ring means is a flat wound spring or other wire form.

FIG. I

EP 0 482 735 A2

**FIG. 2**

**FIG. 4**

FIG. 3

EP 0 482 735 A2

**FIG. 5**

10